# EUROPEAN PATENT SPECIFICATION

(11) **EP 3 490 790 B1**
(45) Date of publication and mention of the grant of the patent: **27.05.2020**
(21) Application number: 18734890.9
(22) Date of filing: 13.06.2018
(51) Int. Cl.: B32B 5/02, B32B 27/12, B32B 27/26, B32B 27/28, B32B 27/32

(54) **STRUCTURE AND METHOD FOR BONDING TOGETHER LOW ENERGY DISSIMILAR MATERIAL**
STRUKTUR ZUM VERBINDEN VON UNGLEICHER ENERGIEARMER MATERIALIEN UND VERFAHREN DAFÜR
STRUCTURE ET PROCÉDÉ DE LIAISON DE MATÉRIAUX DISSEMBLABLES À FAIBLE ÉNERGIE

(30) Priority: 15.06.2017 GB 201709560
(43) Date of publication of application: 05.06.2019
(73) Proprietor: Advanced Insulation Limited, Gloucester, Gloucestershire GL2 4PA (GB)
(72) Inventor: SHEPHERD, Simon Harry, Gloucester Gloucestershire GL2 4PA (GB); BOYES, Alastair, Gloucester Gloucestershire GL2 4PA (GB)
(74) Representative: Swindell & Pearson Limited
(86) International application number: PCT/GB2018/051615
(87) International publication number: WO 2018/229483

(56) References cited:
- WO-A1-2009/146254
- WO-A2-2008/016975
- US-A1- 2004 265 524
- US-A1- 2005 151 299
- US-A1- 2015 099 078

## Description

### TECHNOLOGICAL FIELD

Examples of the disclosure relate to a tie coat structure, and a method of providing a tie coat structure, and particularly a tie coat structure for bonding together low energy dissimilar materials. Examples of the disclosure also relate to a thermal insulating structure, and a method of providing a thermal insulating structure, in which the tie coat structure is provided to bond together low energy dissimilar materials of the thermal insulating structure.

### BACKGROUND

A number of low energy dissimilar materials are difficult to bond together, and particularly to securely bond together. It may though be desired to bond such materials together to obtain the characteristics of each material. One such situation is to provide insulation for subsea equipment as may be used in hydrocarbon facilities. In such instances it is required to provide a bond which will be strong and long lasting in the harsh operating conditions experienced subsea. US2004/265524A1 discloses a tie layer structure suitable for bonding dissimilar materials, the tie layer comprising a thermoplastic polyethylene layer laminated to a silane-grafted polyethylene layer.

There is a requirement therefore to provide tie coat structures which securely bond together low energy dissimilar materials wherein the bond formed will be strong and long lasting in the harsh operating conditions experienced subsea.

### BRIEF SUMMARY

According to the invention there is provided a tie coat structure comprising a plurality of layers, wherein a first of the layers comprises a thermoplastic polymer, a second of the layers comprises glass, and a third of the layers comprises silicone, wherein the second layer is provided between the first and third layers.

The thermoplastic polymer may comprise polypropylene or polyethylene. The polypropylene or polyethylene may comprise functionality to improve adhesion to other materials. The polypropylene or polyethylene may comprise functionality to improve adhesion to the second layer.

The glass comprises any of single ply glass, stitched glass, woven glass, glass fibre, glass mat reinforced thermoplastics or combinations thereof. The second layer may provide an interfacial layer which can readily bond with the first layer and the third layer.

The silicone may comprise cured silicone, wherein the cured silicone is the reaction product of a first part comprising a polydiorganosiloxane polymer and a second part comprising an organohydrogensiloxane crosslinker, wherein the reaction is catalyzed by a metallic catalyst. The metallic catalyst may be a platinum catalyst.

The first layer may have a thickness of about 0.1 to 10 mm, and may have a thickness of about 0.5 to 5 mm, and may have a thickness of about 0.5 to 2 mm. The second layer may have a thickness of about 0.1 to 2 mm, and may have a thickness of about 0.1 to 1 mm, and may have a thickness of about 0.1 to 0.5 mm. The third layer may have a thickness of about 0.1 to 10 mm, and may have a thickness of about 0.5 to 5 mm, and may have a thickness of about 0.5 to 2 mm.

The first, second and third layers may comprise adhesion promoting additives.

A primer may be provided between the first and second layers, and a primer may be provided between the second and third layers.

The tie coat structure may be provided as a pre-formed tape, or may be provided as sheet.

According to the invention there is provided a method of providing tie coat structure, wherein the tie coat structure comprises a plurality of layers, wherein a first of the layers comprises a thermoplastic, a second of the layers comprises glass, and a third of the layers comprises silicone, the method comprising bonding the first layer to the second layer and bonding the second layer to the third layer such that the second layer is provided between the first and third layers. The glass comprises any of: single ply glass, stitched glass, woven glass, glass fibre, glass mat reinforced thermoplastics or combinations thereof.

The method may comprise chemically and/or mechanically bonding the first layer to the second layer, and the second layer to the third layer.

According to the invention there is provided a thermal insulating structure for a substrate for use subsea, the thermal insulating structure comprising a first material comprising a thermoplastic polymer, a second material comprising silicone, and a tie coat structure provided between the first and second materials, wherein the tie coat structure comprises a plurality of layers, wherein a first of the layers comprises a thermoplastic polymer, a second of the layers comprises glass, and a third of the layers comprises silicone, wherein the second layer is provided between the first and third layers, wherein the first layer of the tie coat structure is bonded to the first material, and the third layer of the tie coat structure is bonded to the second material. The glass comprises any of: single ply glass, stitched glass, woven glass, glass fibre, glass mat reinforced thermoplastics or combinations thereof.

The thermoplastic polymer of the first material may be syntactic. The thermoplastic polymer of the first material may be a subsea insulation material. The thermoplastic polymer of the first material may comprise polypropylene or polyethylene. The silicone of the second material may be syntactic. The silicone of the second material may be cured silicone, wherein the cured silicone is the reaction product of a first part comprising a polydiorganosiloxane polymer and a second part comprising an organohydrogensiloxane crosslinker, wherein the reaction is catalyzed by a metallic catalyst. The cured silicone of the second material may be a subsea insulation material. The metallic catalyst may be a platinum catalyst.

According to the invention there is provided a method of providing a thermal insulating structure for a substrate for use subsea, the thermal insulating structure comprising a first material comprising a thermoplastic polymer, a second material comprising silicone, and a tie coat structure, wherein the tie coat structure comprises a plurality of layers, wherein a first of the layers comprises a thermoplastic polymer, a second of the layers comprises glass, and a third of the layers comprises silicone, wherein the second layer is provided between the first and third layers, wherein the method comprises bonding the first layer of the tie coat structure to the first material, and bonding the third layer of the tie coat structure to the second material such that the tie coat structure is provided between the first and second materials. The glass comprises any of: single ply glass, stitched glass, woven glass, glass fibre, glass mat reinforced thermoplastics or combinations thereof.

The method may comprise heating an external surface of the first material and an external surface of the first layer of the tie coat structure, and applying the respective heated surfaces together to form a bond, and subsequently heating an external surface of the second material and an external surface of the third layer of the tie coat structure, and applying the respective heated surfaces together to form a bond. The method may comprise applying pressure to the surfaces to be bonded.

The respective surfaces may be heated to between about 120°C to 160°C, and may be heated to about 130°C to 150°C, and may be heated to about 140°C.

The thermoplastic polymer of the first material may be syntactic. The thermoplastic polymer of the first material may be a subsea insulation material. The thermoplastic polymer of the first material may comprise polypropylene or polyethylene. The silicone of the second material may be syntactic. The silicone of the second material may be cured silicone, wherein the cured silicone is the reaction product of a first part comprising a polydiorganosiloxane polymer and a second part comprising an organohydrogensiloxane crosslinker, wherein the reaction is catalyzed by a metallic catalyst. The cured silicone of the second material may be a subsea insulation material. The metallic catalyst may be a platinum catalyst.

According to various, but not necessarily all, examples of the disclosure there may be provided examples as claimed in the appended claims.

### BRIEF DESCRIPTION

For a better understanding of various examples that are useful for understanding the detailed description, reference will now be made by way of example only.

### DETAILED DESCRIPTION

Examples of the disclosure relate to a tie coat structure, and a method of providing a tie coat structure, and particularly a tie coat structure for bonding together low energy dissimilar materials. Examples of the disclosure also relate to a thermal insulating structure, and a method of providing a thermal insulating structure, in which the tie coat structure is provided to bond together low energy dissimilar materials of the thermal insulating structure.

The thermal insulating structure may be for subsea equipment as may be used in hydrocarbon facilities. In such applications there is a requirement to provide tie coat structures which securely bond together low energy dissimilar materials of the thermal insulating structure, wherein the bond formed will be strong and long lasting in the harsh operating conditions experienced subsea.

In such applications, the thermal insulation structure maintains the temperature of the extracted fluids as they pass through portions of the equipment exposed to the cooling effects of sea water. Items of subsea equipment which benefit from thermal insulation include: wellheads and Xmas trees, spool pieces, manifolds, risers and pipe field joints.

The tie coat structure according to examples of the disclosure comprises a plurality of layers. A first of the layers comprises a thermoplastic polymer, which may comprise polypropylene or polyethylene. A second of the layers comprises glass, which may comprise single ply glass, wither glass, stitched glass, woven glass, glass fibre, glass mat reinforced thermoplastics or combinations thereof. A third of the layers comprises silicone, which may comprise cured silicone, wherein the cured silicone is the reaction product of a first part comprising a polydiorganosiloxane polymer and a second part comprising an organohydrogensiloxane crosslinker, wherein the reaction is catalyzed by a metallic catalyst. The metallic catalyst may be a platinum catalyst. The polydiorganosiloxane polymer may be polymethylvinyl siloxane. The organohydrogensiloxane crosslinker may be polymethylhydro siloxane.

The second layer is provided between the first and third layers. The first and second layers of the tie coat structure are provided on opposite sides of the tie coat structure. The first and second layers of the tie coat structure also define external surfaces of the tie coat structure, and are therefore available to bond to other materials.

In some examples, a primer is provided between the first and second layers and/or between the second and third layers. In other examples, a primer is not provided between the respective layers. The first, second and third layers may comprise adhesion promoting additives.

In some examples, the polypropylene or polyethylene comprises functionality to improve adhesion to other materials. The polypropylene or polyethylene may comprise functionality to improve adhesion to the second layer, in particular.

The second layer may provide an interfacial layer which can readily bond with the first layer and the third layer.

The first layer has a thickness of about 0.1 to 10 mm, and may have a thickness of about 0.5 to 5 mm, and may have a thickness of about 0.5 to 2 mm. The second layer has a thickness of about 0.1 to 2 mm, and may have a thickness of about 0.1 to 1 mm, and may have a thickness of about 0.1 to 0.5 mm. The third layer has a thickness of about 0.1 to 10 mm, and may have a thickness of about 0.5 to 5 mm, and may have a thickness of about 0.5 to 2 mm.

The tie coat structure may be provided as a pre-formed tape, or may be provided as sheet.

Examples of the disclosure also provide a method of providing tie coat structure according to examples of the disclosure. In some examples, the method comprises chemically and/or mechanically bonding the first layer to the second layer, and the second layer to the third layer such that the second layer is provided between the first and third layers.

Examples of the disclosure also provide a thermal insulating structure for a substrate for use subsea. The thermal insulating structure comprises a first material comprising a thermoplastic polymer, a second material comprising silicone and a tie coat structure according to examples of the disclosure provided between the first and second materials. The first layer of the tie coat structure, which comprises a thermoplastic polymer, is bonded to the first material also comprising a thermoplastic polymer, and the third layer of the tie coat structure, which comprises silicone, is bonded to the second material which also comprises silicone.

In some examples, the first material comprises a syntactic thermoplastic polymer, and the second material comprises a syntactic silicone.

Advantageously, the first layer and first material each comprise a thermoplastic polymer, and the third layer and the second material each comprise silicone. Bonding the first material comprising a thermoplastic polymer directly to the second material comprising silicone would be difficult as these are low energy dissimilar materials, and would likely result in poor adhesion between the two materials. The tie coat structure however bridges the two low energy dissimilar materials and presents a surface to each respective material comprising like material, i.e. silicon or thermoplastic polymer. It is possible therefore to provide a bond which will be strong and long lasting, for instance, in the harsh operating conditions experienced subsea.

In some examples, the thermoplastic polymer of the first material is a subsea insulation material. The thermoplastic polymer of the first material may comprise polypropylene or polyethylene. The silicone of the second material may be cured silicone, wherein the cured silicone of the second material is the reaction product of a first part comprising a polydiorganosiloxane polymer and a second part comprising an organohydrogensiloxane crosslinker, wherein the reaction is catalyzed by a metallic catalyst. The polydiorganosiloxane polymer is polymethylvinyl siloxane. The organohydrogensiloxane crosslinker is polymethylhydro siloxane. The cured silicone of the second material may be a subsea insulation material. The metallic catalyst may be a platinum catalyst.

Examples of the disclosure also provide a method of providing a thermal insulating structure according to examples of the disclosure for a substrate for use subsea.

In some examples, the method comprises heating an external surface of the first material and an external surface of the first layer of the tie coat structure, and applying the respective heated surfaces together to form a bond, and subsequently heating an external surface of the second material and an external surface of the third layer of the tie coat structure, and applying the respective heated surfaces together to form a bond. The method may comprise applying pressure to the respective surfaces to be bonded.

The respective surfaces may be heated to between about 120°C to 160°C, and may be heated to about 130°C to 150°C, and may be heated to about 140°C.

In examples where the tie coat structure is provided as a tape or sheet, the tape or sheet could be rolled over the heated thermoplastic polymer and pressed down onto the thermoplastic polymer.

Table 1 below provides details of three tie coat structures according to the disclosure.

**Table 1**

| **Layer** | **Example 1 (thickness of layer)** | **Example 2 (thickness of layer)** | **Example 3 (thickness of layer)** |
|---|---|---|---|
| First layer of tie coat | 0.2mm | 2mm | 5mm |
| Second layer of tie coat | 0.1mm | 0.5mm | 2mm |
| Third layer of tie coat | 0.1mm | 2mm | 5mm |

In each of the examples in table 1 above, the first layer comprises a thermoplastic polymer, the second layer comprises glass, and the third layer comprises silicone.

In particular, the first layer comprises polypropylene, the second layer comprises single ply glass and the third layer comprise cured silicone, which is the reaction product of a first part comprising polymethylvinyl siloxane and a second part comprising polymethylhydro siloxane.

There is thus described a tie coat structure, a method of providing a tie coat structure, a thermal insulating structure, and a method of providing a thermal insulating structure, with a number of advantages as detailed above.

Although embodiments of the present invention have been described in the preceding paragraphs with reference to various examples, it should be appreciated that modifications to the examples given can be made without departing from the scope of the invention as claimed. For example, the first layer of the tie coat structure may be chemically treated to promote adhesion to the first material.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

In this brief description, reference has been made to various examples. The description of features or functions in relation to an example indicates that those features or functions are present in that example. The use of the term "example" or "for example" or "may" in the text denotes, whether explicitly stated or not, that such features or functions are present in at least the described example, whether described as an example or not, and that they can be, but are not necessarily, present in some of or all other examples. Thus "example", "for example" or "may" refers to a particular instance in a class of examples. A property of the instance can be a property of only that instance or a property of the class or a property of a subclass of the class that includes some but not all of the instances in the class. It is therefore implicitly disclosed that a features described with reference to one example but not with reference to another example, can where possible be used in that other example but does not necessarily have to be used in that other example.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A tie coat structure comprising a plurality of layers, wherein a first of the layers comprises a thermoplastic polymer, a second of the layers comprises glass, and a third of the layers comprises silicone, wherein the second layer is provided between the first and third layers; wherein the glass comprises any of: single ply glass, stitched glass, woven glass, glass fibre, glass mat reinforced thermoplastics or combinations thereof.

2. A tie coat structure according to claim 1, wherein the thermoplastic polymer comprises polypropylene or polyethylene.

3. A tie coat structure according to any of the preceding claims, wherein the silicone comprises cured silicone, the cured silicone being the reaction product of a first part comprising a polydiorganosiloxane polymer and a second part comprising an organohydrogensiloxane crosslinker, wherein the reaction is catalyzed by a metallic catalyst.

4. A tie coat structure according to any of the preceding claims, wherein the first layer has a thickness of about 0.1 to 10 mm; the second layer has a thickness of about 0.1 to 2 mm; and the third layer has a thickness of about 0.1 to 10 mm.

5. A method of providing a tie coat structure, wherein the tie coat structure comprises a plurality of layers, wherein a first of the layers comprises a thermoplastic polymer, a second of the layers comprises glass, wherein the glass comprises any of: single ply glass, stitched glass, woven glass, glass fibre, glass mat reinforced thermoplastics or combinations thereof, and a third of the layers comprises silicone, the method comprising:
bonding the first layer to the second layer; and
bonding the second layer to the third layer such that the second layer is provided between the first and third layers.

6. A method according to claim 5, wherein the method comprises chemically bonding the first layer to the second layer, and the second layer to the third layer.

7. A method according to claim 5 or 6, wherein the method comprises mechanically bonding the first layer to the second layer, and the second layer to the third layer.

8. A thermal insulating structure for a substrate for use subsea, the thermal insulating structure comprising a first material comprising a thermoplastic polymer, a second material comprising silicone, and a tie coat structure provided between the first and second materials, wherein the tie coat structure comprises a plurality of layers, wherein a first of the layers comprises a thermoplastic polymer, a second of the layers comprises glass, wherein the glass comprises any of: single ply glass, stitched glass, woven glass, glass fibre, glass mat reinforced thermoplastics or combinations thereof, and a third of the layers comprises silicone, wherein the second layer is provided between the first and third layers, wherein the first layer of the tie coat structure is bonded to the first material, and the third layer of the tie coat structure is bonded to the second material.

9. A thermal insulating structure according to claim 8, wherein the thermoplastic polymer of the first material is syntactic.

10. A thermal insulating structure according to claims 8 or 9, wherein the thermoplastic polymer of the first material is a subsea insulation material.

11. A thermal insulating structure according to any of claims 8 to 10, wherein the silicone of the second material is syntactic.

12. A thermal insulating structure according to any of claims 8 to 11, wherein the silicone of the second material is cured silicone, the cured silicone being the reaction product of a first part comprising a polydiorganosiloxane polymer and a second part comprising an organohydrogensiloxane crosslinker, wherein the reaction is catalyzed by a metallic catalyst.

13. A thermal insulating structure according to claim 12, wherein the cured silicone of the second material is subsea insulation material.

14. A method of providing a thermal insulating structure for a substrate for use subsea, the thermal insulating structure comprising a first material comprising a thermoplastic polymer, a second material comprising silicone, and a tie coat structure, wherein the tie coat structure comprises a plurality of layers, wherein a first of the layers comprises a thermoplastic polymer, a second of the layers comprises glass, wherein the glass comprises any of: single ply glass, stitched glass, woven glass, glass fibre, glass mat reinforced thermoplastics or combinations thereof, and a third of the layers comprises silicone, wherein the second layer is provided between the first and third layers, wherein the method comprises:
bonding the first layer of the tie coat structure to the first material; and
bonding the third layer of the tie coat structure to the second material such that the tie coat structure is provided between the first and second materials.

15. A method according to claim 14, wherein the method comprises:
heating an external surface of the first material and an external surface of the first layer of the tie coat structure; and
applying the respective heated surfaces together to form a bond; and
heating an external surface of the second material and an external surface of the third layer of the tie coat structure; and
applying the respective heated surfaces together to form a bond.

## Patentansprüche

1. Haftgrund-Struktur aufweisend eine Vielzahl von Schichten, wobei eine erste der Schichten ein thermoplastisches Polymer, eine zweite der Schichten Glas, und eine dritte der Schichten Silikon aufweist, wobei die zweite Schicht zwischen der ersten und dritten Schicht angeordnet ist; wobei das Glas ein beliebiges aus Folgendem aufweist: Einzelschicht-Glas, Glasgestrick, Glasgewebe, Glasfasern, mit Glasmatten verstärkte Thermoplaste oder Kombinationen hiervon.

2. Haftgrund-Struktur nach Anspruch 1, wobei das thermoplastische Polymer Polypropylen oder Polyethylen umfasst.

3. Haftgrund-Struktur nach einem der vorhergehenden Ansprüche, wobei das Silikon vernetztes Silikon umfasst, wobei das vernetzte Silikon das Reaktionsprodukt eines ersten Teils ist, das Polydiorganosiloxan-Polymer aufweist und eines zweiten Teils ist, das einen Organohydrogensiloxan-Vernetzer aufweist, wobei die Reaktion durch einen Metallkatalysator katalysiert ist.

4. Haftgrund-Struktur nach einem der vorhergehenden Ansprüche, wobei die erste Schicht eine Dicke von 0,1 bis 10mm hat; die zweite Schicht eine Dicke von 0,1 bis 2mm hat; und die dritte Schicht eine Dicke von 0,1 bis 10mm hat.

5. Verfahren zur Bereitstellung einer Haftgrund-Struktur, wobei die Haftgrund-Struktur eine Vielzahl von Schichten aufweist, wobei eine erste der Schichten ein thermoplastisches Polymer aufweist, eine zweite der Schichten Glas aufweist, wobei das Glas ein beliebiges aus Folgendem aufweist: Einzelschicht-Glas, Glasgestrick, Glasgewebe, Glasfasern, mit Glasmatten verstärkte Thermoplaste oder Kombinationen hiervon, und eine dritte der Schichten Silikon aufweist, das Verfahren umfassend:
Bonden der ersten Schicht an die zweite Schicht; und
Bonden der zweiten Schicht an die dritte Schicht, so dass die zweite Schicht zwischen der ersten und der zweiten Schicht angeordnet ist.

6. Verfahren nach Anspruch 5, wobei das Verfahren chemisches Bonden der ersten Schicht an die zweite Schicht und der zweiten Schicht an die dritte Schicht umfasst.

7. Verfahren nach Anspruch 5 oder 6, wobei das Verfahren mechanisches Bonden der ersten Schicht an die zweite Schicht und der zweiten Schicht an die dritte Schicht umfasst.

8. Thermisch isolierende Struktur für ein Substrat für den Unterwassereinsatz, wobei die thermisch isolierende Struktur ein erstes Material umfasst, das ein thermoplastisches Polymer aufweist, ein zweites Material umfasst, das Silikon aufweist, und mit einer Haftgrund-Struktur, die zwischen dem ersten und zweiten Material angeordnet ist, wobei die Haftgrund-Struktur eine Vielzahl von Schichten aufweist, wobei eine erste der Schichten ein thermoplastisches Polymer aufweist, eine zweite der Schichten Glas aufweist, wobei das Glas ein beliebiges aus Folgendem aufweist: Einzelschicht-Glas, Glasgestrick, Glasgewebe, Glasfasern, mit Glasmatten verstärkte Thermoplaste oder Kombinationen hiervon, und eine dritte der Schichten Silikon aufweist, wobei die zweite Schicht zwischen der ersten und dritten Schicht angeordnet ist, wobei die erste Schicht der Haftgrund-Struktur an das erste Material gebondet ist, und die dritte Schicht der Haftgrund-Struktur an das zweite Material gebondet ist.

9. Thermisch isolierende Struktur nach Anspruch 8, wobei das thermoplastische Polymer des ersten Materials syntaktisch ist.

10. Thermisch isolierende Struktur nach Anspruch 8 oder 9, wobei das das thermoplastische Polymer des ersten Materials ein Unterwasser-Isolationsmaterial ist.

11. Thermisch isolierende Struktur nach einem der Ansprüche 8 bis 10, wobei das Silikon des zweiten Materials syntaktisch ist.

12. Thermisch isolierende Struktur nach einem der Ansprüche 8 bis 11, wobei das Silikon des zweiten Materials vernetztes Silikon ist, wobei das vernetzte Silikon das Reaktionsprodukt eines ersten Teils ist, das Polydiorganosiloxan-Polymer aufweist und eines zweiten Teils ist, das einen Organohydrogensiloxan-Vernetzer aufweist, wobei die Reaktion durch einen Metallkatalysator katalysiert ist.

13. Thermisch isolierende Struktur nach Anspruch 12, wobei das vernetzte Silikon des zweiten Materials ein Unterwasser-Isolationsmaterial ist.

14. Verfahren zur Bereitstellung einer thermisch isolierenden Struktur für ein Substrat für den Unterwassereinsatz wobei die thermisch isolierende Struktur ein erstes Material umfasst, das ein thermoplastisches Polymer aufweist, ein zweites Material umfasst, das Silikon aufweist, und mit einer Haftgrund-Struktur, die zwischen dem ersten und zweiten Material angeordnet ist, wobei die Haftgrund-Struktur eine Vielzahl von Schichten aufweist, wobei eine erste der Schichten ein thermoplastisches Polymer aufweist, eine zweite der Schichten Glas aufweist, wobei das Glas ein beliebiges aus Folgendem aufweist: Einzelschicht-Glas, Glasgestrick, Glasgewebe, Glasfasern, mit Glasmatten verstärkte Thermoplaste oder Kombinationen hiervon, und eine dritte der Schichten Silikon aufweist, wobei die zweite Schicht zwischen der ersten und dritten Schicht angeordnet ist, wobei das Verfahren umfasst:
Bonden der ersten Schicht der Haftgrund-Struktur an das erste Material; und
Bonden der dritten Schicht der Haftgrund-Struktur an das zweite Material, so dass die Haftgrund-Struktur zwischen dem ersten und dem zweiten Material angeordnet ist.

15. Verfahren nach Anspruch 14, wobei das Verfahren umfasst:
Erwärmen einer externen Oberfläche des ersten Materials und einer externen Oberfläche der ersten Schicht der Haftgrund-Struktur; und
Applizieren der betreffenden erwärmten Oberflächen aneinander, um eine Verbindung zu schaffen; und
Erwärmen einer externen Oberfläche des zweiten Materials und einer externen Oberfläche der dritten Schicht der Haftgrund-Struktur; und
Applizieren der betreffenden erwärmten Oberflächen aneinander, um eine Verbindung zu schaffen.

## Revendications

1. Structure de couche de liaison comprenant une pluralité de couches, dans laquelle une première des couches comprend un polymère thermoplastique, une deuxième des couches comprend du verre, et une troisième des couches comprend du silicone, dans laquelle la deuxième couche est prévue entre la première et la troisième couches ; dans lequel le verre comprend l'un quelconque des verres suivants : du verre monocouche, du verre cousu, du verre tissé, de la fibre de verre, des thermoplastiques renforcés de mat de verre ou leurs combinaisons.

2. Structure de couche de liaison selon la revendication 1, dans laquelle le polymère thermoplastique comprend du polypropylène ou du polyéthylène.

3. Structure de couche de liaison selon l'une quelconque des revendications précédentes, dans laquelle le silicone comprend du silicone durci, le silicone durci étant le produit de réaction d'une première partie comprenant un polymère de polydiorganosiloxane et une seconde partie comprenant un réticulant organohydrogénosiloxane, dans lequel la réaction est catalysée par un catalyseur métallique.

4. Structure de couche de liaison selon l'une quelconque des revendications précédentes, dans laquelle la première couche a une épaisseur d'environ 0,1 à 10 mm ; la deuxième couche a une épaisseur d'environ 0,1 à 2 mm ; et la troisième couche a une épaisseur d'environ 0,1 à 10 mm.

5. Procédé pour fournir une structure de couche de liaison, dans lequel la structure de couche de liaison comprend une pluralité de couches, dans lequel une première des couches comprend un polymère thermoplastique, une deuxième des couches comprend du verre, dans lequel le verre comprend l'un quelconque des verres suivants : du verre monocouche, du verre cousu, du verre tissé, de la fibre de verre, des thermoplastiques renforcés de mat de verre ou leurs combinaisons, et une troisième des couches comprend du silicone, le procédé comprenant les étapes consistant à :
lier la première couche à la deuxième couche ; et
lier la deuxième couche à la troisième couche de telle sorte que la deuxième couche soit prévue entre les première et troisième couches.

6. Procédé selon la revendication 5, dans lequel le procédé comprend la liaison chimique de la première couche à la deuxième couche, et de la deuxième couche à la troisième couche.

7. Procédé selon la revendication 5 ou 6, dans lequel le procédé comprend la liaison mécanique de la première couche à la deuxième couche, et de la deuxième couche à la troisième couche.

8. Structure d'isolation thermique pour un substrat à utiliser en milieu sous-marin, la structure d'isolation thermique comprenant un premier matériau comprenant un polymère thermoplastique, un deuxième matériau comprenant du silicone et une structure de couche de liaison prévue entre les premier et deuxième matériaux, dans laquelle la structure de couche de liaison comprend une pluralité de couches,
dans lequel une première des couches comprend un polymère thermoplastique, une deuxième des couches comprend du verre, dans lequel le verre comprend l'un quelconque des verres suivants : du verre monocouche, du verre cousu, du verre tissé, de la fibre de verre, des thermoplastiques renforcés de mat de verre ou leurs combinaisons, et une troisième des couches comprend du silicone, dans lequel la deuxième couche est prévue entre les première et troisième couches,
dans lequel la première couche de la structure de couche de liaison est liée au premier matériau, et la troisième couche de la structure de couche de liaison est liée au deuxième matériau.

9. Structure thermiquement isolante selon la revendication 8, dans laquelle le polymère thermoplastique du premier matériau est syntaxique.

10. Structure thermiquement isolante selon les revendications 8 ou 9, dans laquelle le polymère thermoplastique du premier matériau est un matériau isolant sous-marin.

11. Structure thermiquement isolante selon l'une quelconque des revendications 8 à 10, dans laquelle la silicone du deuxième matériau est syntaxique.

12. Structure thermiquement isolante selon l'une quelconque des revendications 1 à 11, dans laquelle le silicone du deuxième matériau est du silicone durci, le silicone durci étant le produit de réaction d'une première partie comprenant un polymère de polydiorganosiloxane et une seconde partie comprenant un réticulant organohydrogénosiloxane, dans lequel la réaction est catalysée par un catalyseur métallique.

13. Structure d'isolation thermique selon la revendication 12, dans laquelle le silicone durci du deuxième matériau est un matériau d'isolation en milieu sous-marin.

14. Procédé de fourniture d'une structure d'isolation thermique pour un substrat à utiliser en milieu sous-marin, la structure d'isolation thermique comprenant un premier matériau comprenant un polymère thermoplastique, un deuxième matériau comprenant du silicone et une structure de couche de liaison, dans laquelle la structure de couche de liaison comprend une pluralité de couches, dans lesquelles une première des couches comprend un polymère thermoplastique, une deuxième des couches comprend du verre, dans lequel le verre comprend l'un quelconque des verres suivants : du verre monocouche, du verre cousu, du verre tissé, de la fibre de verre, des thermoplastiques renforcés de mat de verre ou leurs combinaisons, et une troisième des couches comprend du silicone, la deuxième couche étant prévue entre les première et troisième couches, le procédé comprenant les étapes consistant à :
lier la première couche de la structure de couche de liaison au premier matériau ; et
lier la troisième couche de la structure de couche de liaison au deuxième matériau de telle sorte que la structure de couche de liaison est prévue entre les premier et deuxième matériaux.

15. Procédé selon la revendication 14, dans lequel le procédé comprend les étapes consistant à :
chauffer une surface externe du premier matériau et une surface externe de la première couche de la structure de couche de liaison ; et
appliquer les surfaces chauffées respectives ensemble pour former une liaison ; et
chauffer une surface externe du deuxième matériau et une surface externe de la troisième couche de la structure de couche de liaison ; et
appliquer les surfaces chauffées respectives ensemble pour former une liaison.
